# EUROPÄISCHE PATENTSCHRIFT

(11) **EP 3 303 062 B1**
(45) Veröffentlichungstag und Bekanntmachung des Hinweises auf die Patenterteilung: **04.12.2019**
(21) Anmeldenummer: 16714876.6
(22) Anmeldetag: 05.04.2016
(51) Int. Cl.: B60R 13/04

(54) **ANORDNUNG ZUR BEFESTIGUNG EINES LEISTENFÖRMIGEN ANBAUTEILS**
ARRANGEMENT FOR FIXING A STRIP-SHAPED ATTACHEMENT
ARRANGEMENT POUR LA FIXATION D'UN ELEMENT EN FORME DE REGLETTE

(30) Priorität: 29.05.2015 DE 102015209997
(43) Veröffentlichungstag der Anmeldung: 11.04.2018
(73) Patentinhaber: Volkswagen Aktiengesellschaft, 38440 Wolfsburg (DE)
(72) Erfinder: JUNGA, Jan, 38440 Wolfsburg (DE)
(74) Vertreter: Clarenbach, Carl-Philipp
(86) Internationale Anmeldenummer: PCT/EP2016/057451
(87) Internationale Veröffentlichungsnummer: WO 2016/192872

(56) Entgegenhaltungen:
- DE-A1- 1 430 924
- FR-A1- 2 887 598

## Beschreibung

Die Erfindung betrifft eine Anordnung zur Befestigung eines leistenförmigen Anbauteils an einem Karosserieteil eines Fahrzeugs, mit wenigstens zwei an dem Karosserieteil festlegbaren Halteelementen, die zur Halterung des Anbauteils ausgebildet sind.

Anordnungen der eingangs genannten Art sind aus dem Stand der Technik bekannt. So offenbart beispielsweise die Gebrauchsmusterschrift DE 90 06 548 U1 ein leistenförmiges Anbauteil, das an einem Karosserieteil durch eine Längsverschiebung befestigbar ist. Dazu weist das Anbauteil mehrere Langlöcher mit einem vergrößerten Endbereich auf, durch welche ein Haltebolzen einschiebbar und durch Längsverschiebung des Anbauteils arretierbar ist. Weiterhin ist es aus der Offenlegungsschrift DE 103 03 365 B4 bereits bekannt, eine Leiste mittels lösbar an dem Karosserieteil anbringbaren Befestigungselementen festzulegen, wobei ähnlich wie bei der zuvor genannten Druckschrift durch eine Längsverschiebung der Leiste die Festlegung erfolgt.

Aus der Offenlegungsschrift DE 198 03 402 A1 ist weiterhin eine Anordnung zur Befestigung eines Anbauteils an einem Karosseriekörper bekannt, mittels eines leistenartigen Halteteils, das einerseits an dem Karosseriekörper befestigt ist und andererseits zur Halterung des Anbauteils dient. Zur Festlegung ist das Anbauteil an dem Halteteil zu verschieben.

Unter einem Karosserieteil eines Fahrzeugs im Sinne der vorliegenden Anmeldung werden sowohl einzelne Fahrzeug-Karosserieelemente als auch Zusammenbauten von Karosserieelementen bis hin zu zumindest im Wesentlichen vollständigen Fahrzeug-Karosseriekörpern verstanden.

Aus der Offenlegungsschrift FR 2 887 598 A1 ist bereits eine Anordnung mit den Merkmalen des Oberbegriffs des Anspruchs 1 zur Befestigung eines leistenförmigen Anbauteils an einem Karosserieteil eines Fahrzeugs bekannt.

Der Erfindung liegt die Aufgabe zugrunde, eine Anordnung zu schaffen, mittels welcher eine einfach durchzuführende Montage des leistenförmigen Anbauteils an dem Karosserieteil erfolgt.

Diese Aufgabe wird durch die Anordnung mit den Merkmalen des Anspruchs 1 gelöst. Die erfindungsgemäße Anordnung hat den Vorteil, dass mit nur wenigen Handgriffen Halteelement und Anbauteil aneinander und an dem Karosserieteil befestigt werden. Insbesondere entfällt im Vergleich zu bekannten Lösungen ein Arbeitsschritt, weil die Halteelemente und das Karosserieteil einerseits und die Halteelemente und das Anbauteil andererseits gleichzeitig aneinander festgelegt werden können. Erfindungsgemäß wird dies dadurch erreicht, dass zumindest eines der Halteelemente durch Längsverschiebung an dem Karosserieteil festlegbar ist, und dass die Halteelemente jeweils mindestens ein Hintergriffelement aufweist, das durch die Längsverschiebung in eine Hintergriffposition mit dem Anbauteil zu dessen Befestigung bringbar/gebracht ist. Durch das Längsverschieben des wenigstens einen Halteelements erfolgt eine Relativbewegung sowohl zu dem Karosserieteil als auch zu dem Anbauteil, sodass das Halteelement einerseits an dem Karosserieteil beispielsweise auf bekannte Art und Weise durch die Längsverschiebung festgelegt wird, und sodass gleichzeitig das Halteelement durch die Längsverschiebung das Anbauteil hintergreift, sodass dieses an dem Halteelement festgelegt ist. Dadurch, dass beide Halteelemente jeweils mindestens ein Hintergriffelement aufweisen, das mit dem Anbauteil zu dessen Befestigung zusammenwirkt, kann durch Verschieben nur eines der Halteelemente das Anbauteil an beiden Halteelementen durch die jeweiligen Hintergriffelemente festgelegt werden, indem beispielsweise durch die Verschiebung des einen Halteelements zunächst die Hintergriffposition zwischen diesem Halteelement und dem Anbauteil erreicht wird, und anschließend das Anbauteil zusammen mit diesem Halteelement weiter längsverschoben wird, sodass dadurch das Hintergriffelement des anderen Halteelements ebenfalls in eine Hintergriffposition mit dem Anbauteil gelangt.

Gemäß einer bevorzugten Weiterbildung der Erfindung ist vorgesehen, dass das Hintergriffelement eines ersten der Halteelemente durch Längsverschiebung des ersten Halteelements relativ zu dem Anbauteil in eine erste Richtung und das Hintergriffelement eines zweiten der Halteelemente durch Längsverschiebung des zweiten Halteelements relativ zu dem Anbauteil in die zweite, der ersten Richtung entgegengesetzte Richtung in die jeweilige Hintergriffposition mit dem Anbauteil bringbar/gebracht ist. Hierdurch wird der Vorteil erreicht, dass durch ein Auseinanderschieben oder Zusammenschieben der Halteelemente automatisch das Befestigen des Anbauteils an den Halteelementen erfolgt. Durch das Verschieben in der entgegengesetzten Richtung kann das Verschieben gleichzeitig durch ein einziges Werkzeug bewirkt werden. Die Relativbewegung der Halteelemente bezüglich des Anbauteils in unterschiedliche beziehungsweise entgegengesetzte Richtungen kann auch erfolgen, wenn, wie zuvor bereits beschrieben, eines der Halteelemente unverschiebbar an dem Karosserieteil festgelegt ist.

Bevorzugt ist vorgesehen, dass beide Halteelemente durch Längsverschiebung an dem Karosserieteil festlegbar sind. Dadurch wird erreicht, dass eine Vormontage eines der Halteelemente nicht notwendig ist. Zur Festlegung durch Längsverschiebung weist das jeweilige Halteelement vorzugsweise Mittel auf, die eine derartige Befestigung durch Längsverschiebung ermöglichen, beispielsweise Mittel, wie sie bereits im Stand der Technik angewendet werden. Sind beide Halteelemente dazu ausgebildet, durch Längsverschiebung an dem Karosserieteil festgelegt zu werden, so sind sie bevorzugt derart ausgebildet, dass sie in entgegengesetzte Richtungen zur Festlegung längsverschoben werden müssen. Dadurch wird erreicht, dass bei der Längsverschiebung der beiden Halteelemente das Anbauteil selbst nicht bewegt werden muss. Hierdurch wird der Vorteil erreicht, dass durch eine einfache Bewegung die Montage des Anbauteils erfolgen kann.

Weiterhin ist bevorzugt vorgesehen, dass das jeweils längsverschiebbare Halteelement ein Langloch zur Aufnahme eines an dem Karosserieteil festgelegten Befestigungsbolzens, insbesondere einer Befestigungsschraube, aufweist, wobei das Langloch im Wesentlichen schmaler ausgebildet ist als ein verbreiterter Kopfabschnitt des Befestigungsbolzens und einen vergrößerten Endabschnitt aufweist, durch welchen der Kopfabschnitt des Befestigungsbolzens hindurchführbar ist. Hierdurch kann das Halteelement einfach derart montiert werden, dass der Befestigungsbolzen durch den vergrößerten Abschnitt hindurchgeführt wird, und anschließend durch das Längsverschieben, bei welchem der Befestigungsbolzen mit seinem im Vergleich zum Kopfabschnitt schmaleren Schaft in den schmalen Bereich des Langlochs eingeschoben wird, an dem Karosserieteil festgelegt werden. Weist dabei das Halteelement vorzugsweise außerdem im Bereich des Langlochs eine Steigung auf, die mit dem Kopfabschnitt des Befestigungsbolzens zusammenwirkt, so wird durch die Längsverschiebung außerdem erreicht, dass das Halteelement durch den Kopfabschnitt gegen das Karosserieteil gepresst wird, wodurch sich eine besonders feste und belastbare Verbindung von Halteelement und Karosserieteil ergibt.

Vorzugsweise, wie oben bereits erwähnt, sind beide Halteelemente durch Längsverschiebung an dem Karosserieteil festlegbar. Dadurch wird insbesondere der Vorteil erreicht, dass beide Halteelemente auf einfache Art und Weise an dem Karosserieteil angebracht werden können und dass insbesondere dann, wenn die Haltelemente durch Längsverschiebung in entgegengesetzte Richtungen an dem Karosserieteil festlegbar sind, das Anbauteil bei der Montage selbst nicht bewegt werden muss, wodurch sich beispielsweise der Vorteil ergibt, dass das Anbauteil nicht auf einem Lack oder dergleichen des Karosserieteils entlangbewegt wird, wodurch ansonsten durch Reibung das Karosserieteil beschädigt werden könnte.

Weiterhin ist bevorzugt vorgesehen, dass die Halteelemente leistenförmig ausgebildet sind und an ihren einander zugewandten Enden jeweils ein Schiebemittel aufweisen, wobei die Schiebemittel derart angeordnet/ausgebildet sind, dass sie durch ein Werkzeug zur Längsverschiebung zumindest eines der Halteelemente gleichzeitig mit einer Kraft beaufschlagbar sind. Es ist somit vorteilhafterweise nur ein Werkzeug notwendig, um beide Halteelemente mit einer Kraft zur Längsverschiebung zu beaufschlagen. Dadurch, dass die Schiebemittel an den einander zugewandten Enden vorgesehen sind, sind sie derart nah beieinander, dass beispielsweise die Schiebemittel durch eine handelsübliche Zange mit einer Betätigungskraft zur Längsverschiebung beaufschlagt werden können.

Besonders bevorzugt ist vorgesehen, dass das Anbauteil im Bereich der Schiebemittel eine Aussparung aufweist, durch welche das Werkzeug bereichsweise zur Kraftbeaufschlagung der Schiebemittel hindurchführbar ist. Die Schiebemittel sind somit hinter dem Anbauteil angeordnet, sodass sie sicher vor ungewollter Kraftbeaufschlagung geschützt sind. Die Aussparung kann nach der Montage beispielsweise durch einen Deckel oder Stopfen verschlossen werden, sodass auch kein Schmutz hinter das Anbauteil gelangen kann. Bei den Schiebemitteln kann es sich beispielsweise um Aufnahmeaussparungen handeln, die dazu ausgebildet sind, die Werkzeugspitzen, insbesondere die Spitzen einer Zange, aufzunehmen, sodass durch Zupressen der Zange die Halteelemente aufeinander zu längsverschoben werden. Die Hintergriffelemente sind dabei entsprechend derart ausgebildet/ausgerichtet, dass sie bei dieser jeweiligen Längsverschiebung in die Hintergriffposition mit dem Anbauteil gelangen.

Gemäß einer alternativen Ausführungsform der Erfindung ist bevorzugt vorgesehen, dass die Schiebemittel als Schiebevorsprünge ausgebildet sind. Dabei stehen die Schiebemittel von dem jeweiligen Halteelement vor und können dadurch auch einfach von dem Werkzeug mit einer Kraft beaufschlagt werden. Insbesondere ist vorgesehen, dass die Schiebevorsprünge in die Aussparung des Anbauteils hineinragen, sodass sie leicht von dem Monteur zu erreichen und zu betätigen sind. Besonders bevorzugt ist vorgesehen, dass die Schiebevorsprünge durch die Aussparung hindurchragen, sodass sie besonders einfach betätigbar sind.

Weiterhin ist bevorzugt vorgesehen, dass sich die einander zugewandten Enden der Halteelemente bereichsweise überlappen, wobei eines der Halteelemente in dem Überlappungsbereich eine Aussparung aufweist, durch welche der Schiebevorsprung des anderen Halteelements hindurchragt. Die Halteelemente sind also nicht nur relativ zueinander verlagerbar, sondern darüber hinaus auch aneinander verschiebbar gelagert, sodass sie sich bereichsweise überlappen. Dadurch, dass an den Enden auch die Schiebemittel beziehungsweise Schiebevorsprünge vorgesehen sind, ist es dann von Vorteil, dass der Schiebevorsprung des anderen Halteelements durch die Aussparung des einen Halteelements hindurchragt. Dadurch wird nämlich erreicht, dass die beiden Schiebevorsprünge derart zueinander liegen, dass dann, wenn sie aufeinander zubewegt werden, die Halteelemente voneinander weggedrückt beziehungsweise längsverschoben werden. Werden in diesem Fall also die Schiebevorsprünge beispielsweise durch eine herkömmliche Zange mit einer Druckkraft/Schiebekraft beaufschlagt, so führt dies dazu, dass die Halteelemente auseinander beziehungsweise in entgegengesetzte Richtungen voneinander wegbewegt werden. Im Vergleich zu dem Zusammenziehen der Halteelemente erfolgt hierdurch eine Krafteinleitung, die eine leichtere Festlegung der Halteelemente und des Anbauteils erlaubt.

Bevorzugt ist dabei vorgesehen, dass zumindest eines der Halteelemente an seinem dem Schiebemittel abgewandten Ende in eine Aufnahmetasche des Anbauteils durch die Längsverschiebung einschiebbar/eingeschoben ist. Dadurch, dass die Schiebemittel beziehungsweise Schiebevorsprünge jeweils in dem Bereich des benachbarten Halteelements liegen und die Halteelemente durch die Kraftbeaufschlagung auseinandergerückt werden, kann erreicht werden, dass das abgewandte Ende des jeweiligen Halteelements in eine Aufnahmetasche eingeschoben wird. Dadurch, dass das Halteelement in die Aufnahmetasche bei der Festlegung der Halteelemente eingeschoben wird, erfolgt eine besonders sichere Arretierung des Anbauteils am von dem Schiebemittel am weitesten entfernten Ende, sodass auch dann, wenn das Anbauteil, das insbesondere eine Anbauleiste ist, und die Halteelemente, vergleichsweise lang ausgebildet sind, noch eine sichere Befestigung/Festlegung des Anbauteils an dem Karosserieteil gewährleistet ist.

Weiterhin ist bevorzugt vorgesehen, dass die Aufnahmetasche des Anbauteils und das eingeschobene/einschiebbare Ende des Halteelements eine Rastvorrichtung zur Arretierung des Anbauteils an dem Halteelement aufweisen. Dadurch wird eine vorteilhafte Verrastung des jeweiligen Halteelements an dem Anbauteil in der Endmontageposition erreicht. Bevorzugt weist die Rastvorrichtung einen an dem Anbauteil oder an dem Halteelement ausgebildeten oder angeordneten elastisch verformbaren Rastvorsprung auf, der mit einer entsprechend dazu komplementär ausgebildeten Rastaufnahme an dem Halteelement beziehungsweise an dem Anbauteil in der Endmontageposition verrastend zusammenwirkt.

Im Folgenden soll die Erfindung anhand der Zeichnungen näher erläutert werden. Dazu zeigen:
- Figur 1: eine Anordnung zur Befestigung eines leistenförmigen Anbauteils in einer Explosionsdarstellung,
- Figuren 2A und 2B: eine Detailansicht der Anordnung in einem Vormontagezustand,
- Figuren 3A und 3B: die Detaildarstellung der Anordnung in einem montierten Zustand,
- Figuren 4A und 4B: eine weitere Detaildarstellung der Anordnung in unterschiedlichen Montagezuständen,
- Figuren 5A und 5B: eine weitere Detaildarstellung der Anordnung in unterschiedlichen Montagezuständen,
- Figuren 6A bis 6F: unterschiedliche Ausführungsbeispiele der Anordnung.

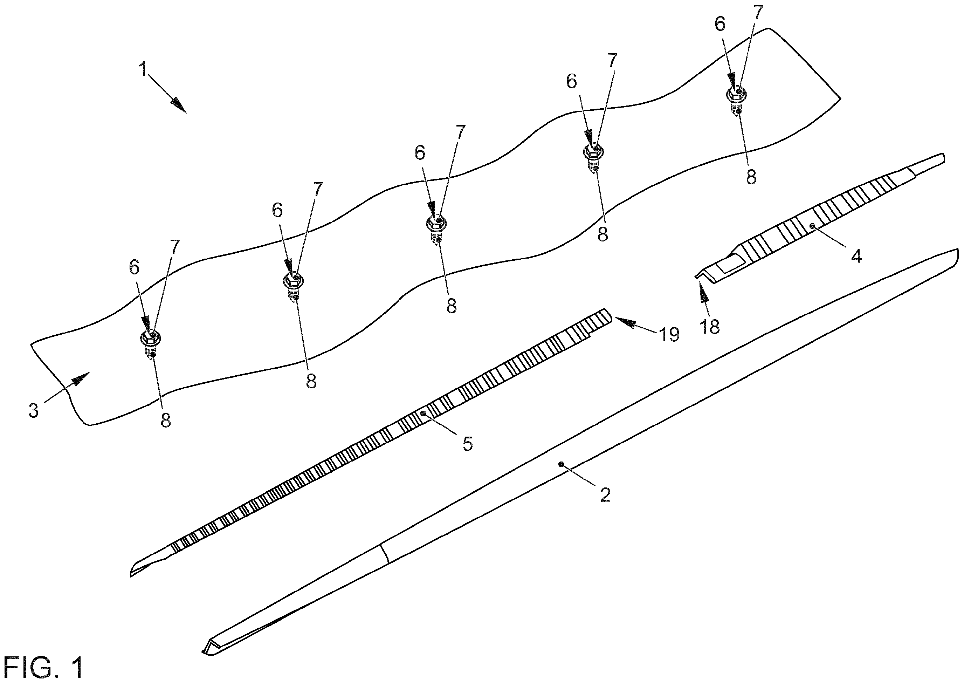

Figur 1 zeigt in einer vereinfachten Explosionsdarstellung eine Anordnung 1 mit einem Anbauteil 2, das als Leistenbeschlag für ein Kraftfahrzeug ausgebildet ist, mit einem Karosserieteil 3 des Kraftfahrzeugs, an welchem das Anbauteil 2 zu befestigen ist, und mit zwei Halteelementen 4, 5, die zur Befestigung des Anbauteils 2 an dem Karosserieteil 3 dienen. Die Halteelemente 4, 5 sind ebenfalls leistenförmig ausgebildet, wobei ihre gemeinsame Längserstreckung in etwa der Längserstreckung des Anbauteils 2 entspricht, und wobei die Halteelemente 4, 5 derart ausgebildet sind, dass sie vollständig von dem Anbauteil 2 aufgenommen werden können, sodass im verbauten Zustand die Halteelemente 4, 5 nicht mehr sichtbar sind.

Die Anordnung 1 weist weiterhin mehrere an dem Karosserieteil 3 angebrachte Befestigungsbolzen in Form von Befestigungsschrauben 6 auf, die in Längserstreckung des Anbauteils 2 hintereinander liegend und gleichmäßig beabstandet zueinander angeordnet sind. Die Befestigungsschrauben 6 weisen jeweils einen Kopfabschnitt beziehungsweise Schraubenkopf 7 sowie einen Schaftabschnitt beziehungsweise Schraubenschaft 8 auf, wobei der Schraubenschaft 8 ein Außengewinde aufweist, das mit einem an dem Karosserieteil 3 angeordneten Innengewinde zusammenwirkt. Die Befestigungsschrauben 6 sind dabei derart weit in das Karosserieteil 3 eingeschraubt, dass die Schraubenköpfe 7 beabstandet zu der Oberfläche des Karosserieteils 3 liegen.

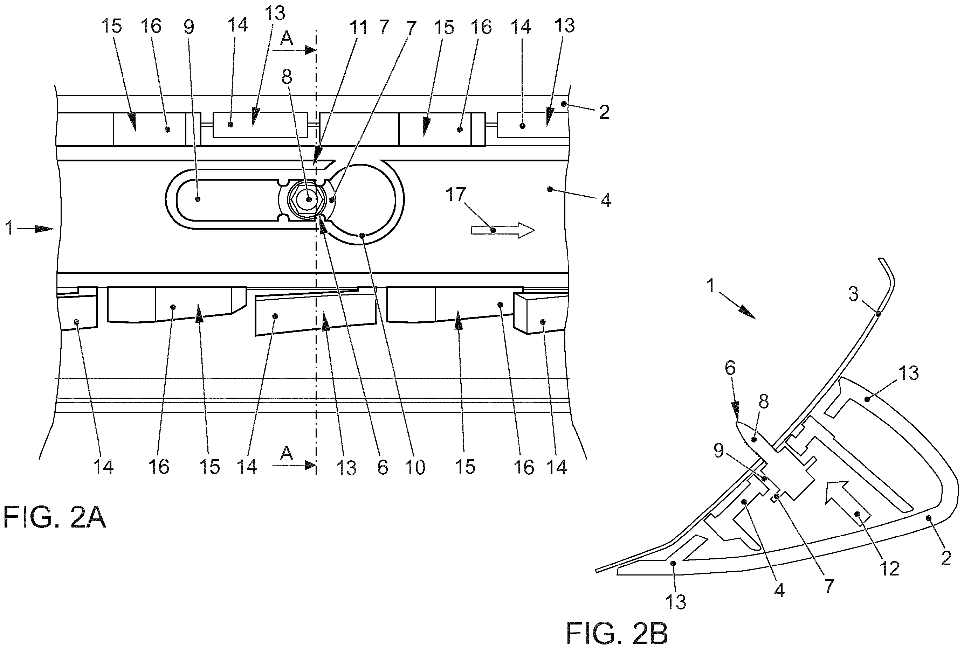

Figuren 2A und 2B zeigen eine Detailansicht der Anordnung in einer Vormontageposition. Die Teilansicht zeigt dabei in Figur 2A eine Draufsicht auf die dem Karosserieteil 3 zugewandte Rückseite des Halteelements 4 unter dem Anbauteil 2, und Figur 2B zeigt eine Querschnittsdarstellung der Anordnung 1 entlang der Linie A-A aus Figur 2A. Das Halteelement 4 weist mehrere Langlöcher 9 auf, wobei jeweils ein Langloch 9 einer der Befestigungsschrauben 7 in dem Karosserieteil 3 zuordenbar ist. Jedes Langloch 9 weist einen schmalen, langlochförmigen Abschnitt auf, sowie einen vergrößerten Endabschnitt 10. Das Langloch 9 weist im Wesentlichen eine Breite auf, die dem Durchmesser des Schraubenschafts 8 entspricht. Der Endabschnitt 10 weist einen Durchmesser auf, der größer ist als der des Schraubenkopfes 7, sodass das Halteelement 4 zur Montage zunächst mit den Endabschnitten 10 fluchtend zu jeweils einer der Befestigungsschrauben 6 ausgerichtet und an das Karosserieteil 3 angedrückt wird, bis der Schraubenkopf 7 der jeweiligen Befestigungsschraube 6 durch den Endabschnitt 10 hindurchtritt. Anschließend wird das Halteelement 4 derart längsverschoben, dass der Schraubenschaft in das Langloch 9 hineingeschoben wird, wodurch der Schraubenkopf 7 in eine Hintergriffposition zu dem Halteelement 4 gelangt. Das Langloch 9 weist dabei im Anschluss an den beziehungsweise benachbart zu dem Endabschnitt 10 Rastmittel 11 auf, durch welche das Halteelement 4 an der jeweiligen Befestigungsschraube 6 in seiner Längserstreckung arretierbar ist. Die Rastmittel 11 sind dabei derart ausgebildet, dass ein Längsverschieben des Halteelements 4 bei Aufbringen einer ausreichend hohen Kraft zur Überwindung der insbesondere elastisch verformbaren Rastmittel 11 möglich ist, bis beispielsweise der Schraubenschaft 8 an dem dem Endabschnitt 10 gegenüberliegenden Ende des Langlochs 9 anliegt.

In der Vormontageposition, in welcher der Schraubenschaft 8 (der Schraubenkopf 7 ist in der Darstellung von Figur 2A aus Übersichtlichkeitsgründen nur gestrichelt dargestellt) durch die Rastmittel 11 gehalten ist, wird anschließend das Anbauteil 2 auf das Halteelement 4 aufgeschoben, wie durch einen Pfeil 12 in Figur 2B gezeigt. Das Aufschieben erfolgt dabei auf das Karosserieteil 3 zu. In Figur 2B ist außerdem zu erkennen, dass der Schraubenkopf 7 nunmehr das Halteelement 4 aus Sicht des Karosserieteils 3 hintergreift. Die Rastmittel 11 sind dabei als in das Langloch 9 hineinragende Vorsprünge ausgebildet. Das Anbauteil 2 überfängt das Halteelement 4 insgesamt und ist derart ausgebildet, dass es das Halteelement 4 zusammen mit der Befestigungsschraube 6 vollständig in seinem Innenraum aufnehmen kann. Das Halteelement 4 weist dazu einen im Wesentlichen V-förmigen Querschnitt auf. An seinen dem Karosserieteil 3 zugewandten Enden weist das Anbauteil 2 mehrere in Richtung des Halteelements 5 vorstehende Hintergriffelemente 13 auf. Wie aus Figur 2A ersichtlich, sind die Hintergriffelemente 13 gleichmäßig und beabstandet zueinander in Längserstreckung des Anbauteils 2 an diesem angeordnet. Insbesondere ist vorgesehen, dass die Hintergriffelemente 13 einstückig mit dem Anbauteil 2 ausgebildet sind. Die Hintergriffelemente 13 liegen beabstandet zum Karosserieteil 3 und weisen jeweils einen sich in Längserstreckung des Anbauteils 2 erstreckenden Abschnitt 14 auf, der in Längserstreckung beziehungsweise Längsverschieberichtung schräg ausgerichtet ist. Dabei sind die Hintergriffmittel 13 des Anbauteils 3 im Bereich des Halteelements 4 alle in die gleiche Richtung schräg ausgerichtet.

Das Halteelement 4 weist ebenfalls Hintergriffmittel 15 auf, die gleichmäßig verteilt an beiden Seiten des Halteelements 4 in Längserstreckung angeordnet sind. Während ein Grundkörper des Halteelements 4 zwischen den Hintergriffmitteln 13 des Anbauteils 2 liegt, wie insbesondere in Figur 2B gezeigt, liegen die Hintergriffmittel 15 im Bereich der Hintergriffmittel 13. Die Hintergriffmittel 15 weisen dabei ebenfalls jeweils einen Abschnitt 16 auf, der in Längserstreckung des Halteelements 4 gesehen schräg ausgerichtet ist. Die Hintergriffmittel 15 sind insbesondere einstückig mit dem Halteelement 5 beziehungsweise mit dem Grundkörper des Halteelements 5 ausgebildet. Die Hintergriffmittel 15 und 13 sind dabei derart ausgebildet beziehungsweise angeordnet, dass in der Vormontageposition die Hintergriffmittel 15 zwischen jeweils zwei Hintergriffmitteln 13 des Anbauteils 2 liegen.

Die Hintergriffmittel 13, 15 sind derart ausgebildet, dass dann, wenn das Halteelement 4 von der Vormontageposition gemäß Figuren 2A und 2B in eine Endmontageposition gemäß Pfeil 17 längsverschoben wird, die Hintergriffmittel 15 des Halteelemts 4 die Hintergriffmittel 13 des Anbauteils 2 hintergreifen und aufgrund der Schräge in Richtung des Karosserieteils 3 ziehen.

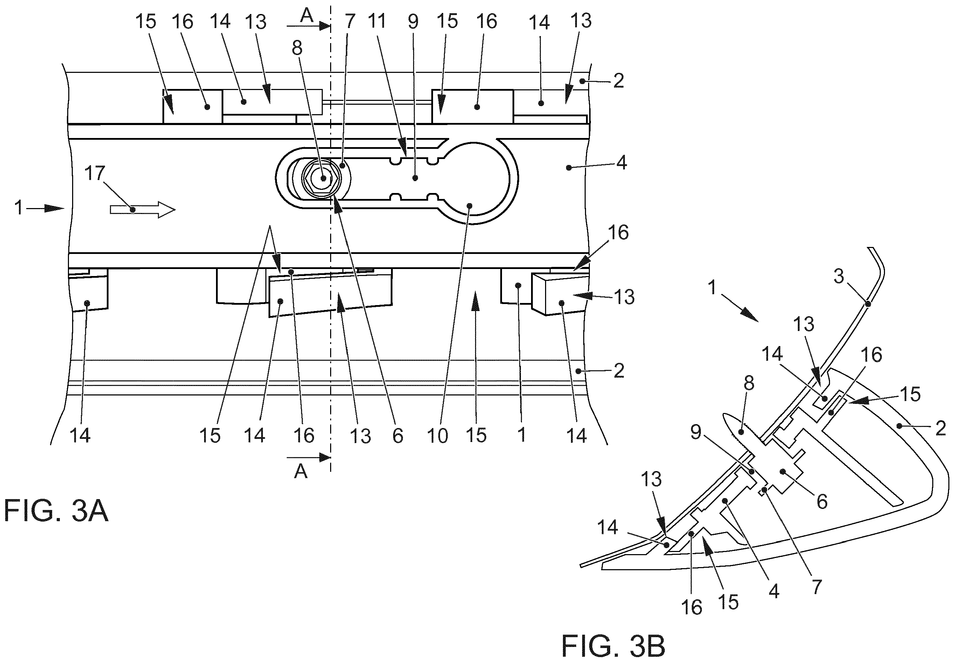

Die Endmontagestellung ist beispielhaft in Figur 3A und 3B gezeigt, wobei Figur 3A erneut eine Draufsicht auf die Anordnung erneut aus Sicht des Karosserieteils 3 und Figur 3B eine Querschnittsdarstellung entlang der Linie A-A aus Figur 3A zeigt. Durch die Längsverschiebung des Halteelements 4 ist somit das Anbauteil 2 in Richtung des Karosserieteils 3 gezogen worden. Gleichzeitig ist das Halteelement 4 an dem Karosserieteil 3 durch das Verschieben des Schraubenschafts 8 weiter in Richtung des dem vergrößerten Endabschnitt 10 abgewandten Ende des Langlochs 9 an dem Karosserieteil 3 ebenfalls festgelegt worden. Insbesondere kann vorgesehen sein, dass auf der von dem Karosserieteil 3 abgewandten Oberseite des Halteelements 3 eine Schräge ausgebildet ist, die mit dem Schraubenkopf 7 zusammenwirkt, sodass dann, wenn das Halteelement 4 in Richtung des Pfeils 17 längsverschoben wird, der Schraubenkopf auf die Schräge trifft und bei weiterer Längsverschiebung dadurch das Halteelement 4 in Richtung des Karosserieteils 3 drängt, wodurch dieses an dem Karosserieteil 3 festgelegt wird.

Das Halteelement 5 sowie das Anbauteil 2 im Bereich des Halteelements 5 sind grundsätzlich dem Halteelement 4 und dem Bereich des Anbauteils 2 im Bereich des Halteelements 4 entsprechend ausgebildet, mit dem Unterschied, dass zum Festlegen des Halteelements 5 und des Anbauteils 2 im Bereich des Halteelements 5 das Halteelement 5 in eine Richtung längsverschoben werden muss, die der Richtung entgegengerichtet ist, in welche das Halteelement 4 zu seiner Festlegung, wie obenstehend beschrieben, längsverschoben wird. Hierzu sind entsprechend die Langlöcher 9 in dem Halteelement 5 andersherum ausgebildet, sodass der vergrößerte Endabschnitt 10 auf der anderen Seite des Langlochs 9 liegt. Während also das Halteelement 4 in dem vorliegenden Ausführungsbeispiel nach rechts verschoben wird, wird das Halteelement 5 nach links verschoben. Entsprechendes gilt auch für die Hintergriffsmittel 13 des Anbauteils 2 im Bereich des Halteelements 5 sowie für die Hintergriffmittel 15 des Halteelements 5, die entsprechend andersherum ausgerichtet sind, sodass bei einem Längsverschieben des Halteelements 5 entgegen der Richtung des Pfeils 17 die Hintergriffmittel 15 des Halteelements 5 die Hintergriffmittel 13 des Anbauteils 2 hintergreifen und dabei das Anbauteil 2 in Richtung des Karosserieteils 3 ziehen, sodass auch das Anbauteil 2 an dem Karosserieteil 3 durch das Halteelement 5 festgelegt wird.

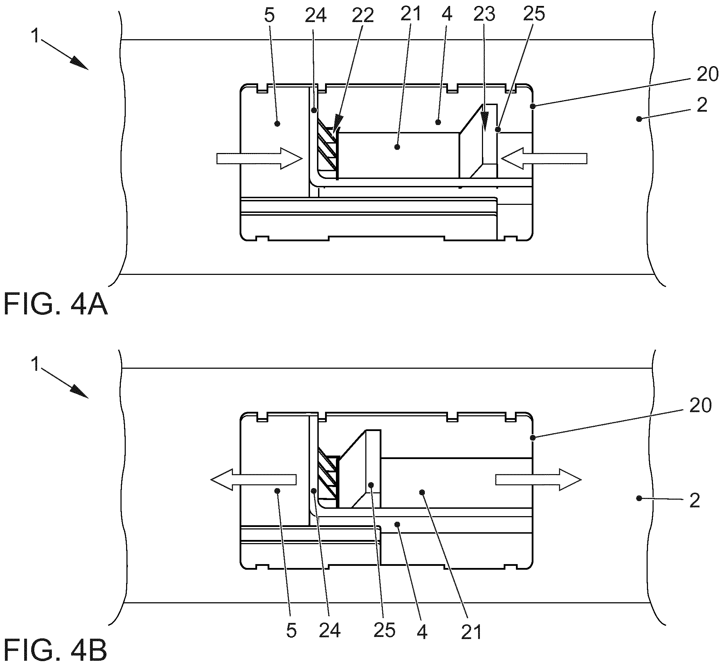

Figuren 4A und 4B zeigen eine vorteilhafte Ausbildung der Anordnung 1, die ein einfaches Verschieben der Halteelemente 4 und 5 in entgegengesetzte Richtungen zu deren Festlegung und zur Festlegung des Anbauteils 2 vorgesehen ist.

Das Anbauteil 2 weist in dem Bereich der einander zugewandten Enden 18 und 19 der Halteelemente 4, 5 eine Aussparung 20 auf. Die Enden 18 und 19 der Halteelemente 4, 5 sind derart ausgebildet, dass sie sich bei der Montage bereichsweise überlappen, wobei das Halteelement 4 abschnittsweise das Halteelement 5 überragt, wie in Figuren 4A und 4B gezeigt. Dabei weist das Halteelement 4 in dem Überlappungsbereich eine Aussparung 21 auf. Die Halteelemente 4, 5 weisen jeweils an ihrem Ende 18, 19 ein Schiebemittel 22 beziehungsweise 23 auf, das jeweils als Schiebevorsprung 24 beziehungsweise 25 ausgebildet ist. Die Schiebevorsprünge 24, 25 ragen dabei in Richtung der Aussparung 20 von dem jeweiligen Halteelement 4, 5 vor. Der Schiebevorsprung 25 ragt dabei in die Aussparung 21 hinein, sodass er auf gleicher Höhe wie der Schiebevorsprung 24 liegt. Die beiden Schiebevorsprünge 25, 24 liegen dabei im Bereich der Aussparung 20 des Anbauteils 2, sodass ein Monteur nunmehr einfach eine Zange oder ein ähnliches Werkzeug durch die Aussparung 20 den Schiebevorsprüngen 24, 25 derart zuführen kann, sodass er diese an ihrer jeweils voneinander abgewandten Seite mit einer Kraft derart beaufschlagt, dass die Schiebevorsprünge 24, 25 aufeinander zubewegt werden, wie durch Pfeile 4A gezeigt. Dies hat zur Folge, dass die Halteelemente 4, 5 in entgegengesetzte Richtungen längsverschoben werden, wie in Figur 4B durch Pfeile gezeigt. Dabei können die Halteelemente 4, 5 maximal derart weit längsverschoben werden, bis die Schiebevorsprünge 24, 25 aneinander anliegen, wie in Figur 4B gezeigt. Figur 4A zeigt dabei die Vormontageposition der Anordnung 1 und Figur 4B die Endmontageposition, wenn die Halteelemente 4, 5 gegeneinander längsverschoben wurden und dadurch mittels der Hintergriffmittel 13, 15 und der Befestigungsschrauben 7 an dem Karosserieteil 3 festgelegt sind.

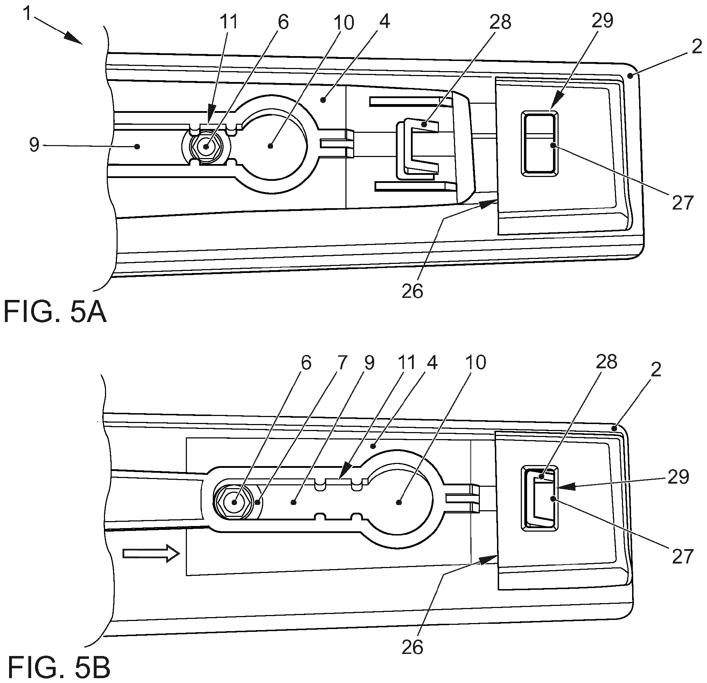

Figuren 5A und 5B zeigen ein weiteres Ausführungsbeispiel, das mit den zuvor genannten Ausführungsbeispielen kombinierbar ist. Dabei zeigen Figuren 5A und 5B jeweils eine Draufsicht auf das Halteelement 4 aus Sicht des Karosserieteils 3. Das Anbauteil 2 weist an seinem dem Halteelement 4 zugeordneten Ende auf seiner Innenseite eine Aufnahmetasche 26 auf, in welche das Halteelement 4 bei seiner Längsverschiebung eingeschoben wird. Figur 5A zeigt dabei erneut die Anordnung 1 in der Vormontageposition und Figur 5B in der Endmontageposition. Das Anbauteil 2 weist an der Aufnahmetasche 26 eine Rastaussparung 27 auf, die mit einem Rastvorsprung 28 des Halteelements 4 zusammenwirkt. Der Rastvorsprung 28 und/oder die Aufnahmetasche 27 sind dabei elastisch verformbar ausgebildet, sodass dann, wenn das Halteelement 4 in seiner Endposition längsverschoben wird, der Rastvorsprung 28 in die Aufnahmetasche 26 unter elastischer Verformung eingeschoben wird und in der Rastaussparung 27 aufgrund seiner Eigenelastizität zurückspringt, sodass er in der Rastaussparung 27 formschlüssig einliegt, wie in Figur 5B gezeigt. Dadurch ist das Anbauteil 2 auf einfache Art und Weise zusätzlich an dem Halteelement 4 arretiert, sodass es nicht selbsttätig lösbar ist. Der Rastvorsprung 28 bildet insofern zusammen mit der Rastaussparung 27 eine Rastvorrichtung 29 zur Arretierung des Anbauteils 2 und der Halteelement 4 in ihrer Endmontage. Zweckmäßigerweise ist das Halteelement 5 und das Anbauteil 2 an dem anderen Ende des Anbauteils 2 entsprechend ausgebildet, sodass auch das Halteelement 5 endseitig durch eine entsprechende Rastvorrichtung 29 mit dem Anbauteil 2 verrastbar ist. Dadurch ist insgesamt die Anordnung 1 sicher an dem Karosserieteil 3 festgelegt und arretiert.

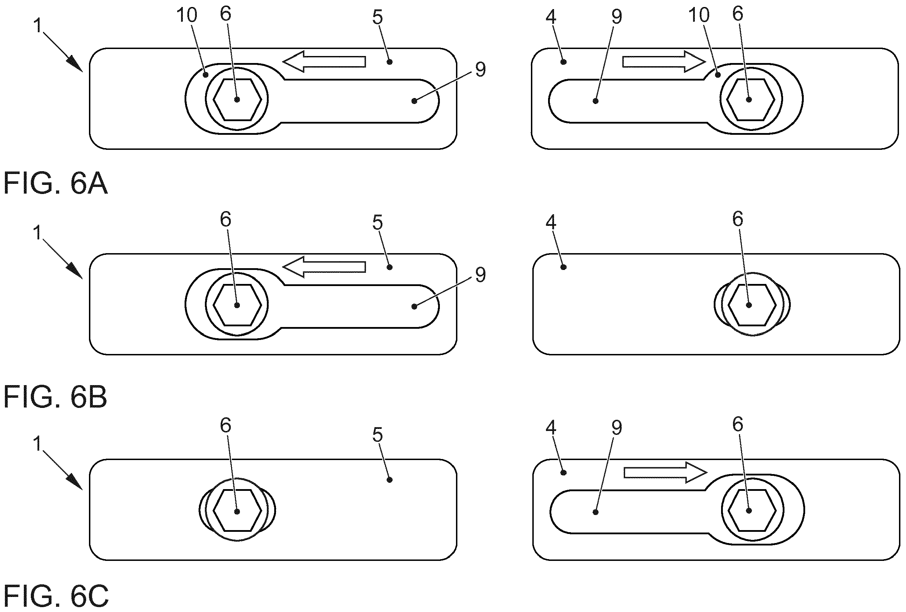

Figuren 6A bis 6F zeigen unterschiedliche Ausführungsvariationen der Anordnung 1, wobei der Einfachheit halber lediglich die Halteelemente 4, 5 in unterschiedlichen Ausgestaltungen gezeigt sind. Gemäß dem Ausführungsbeispiel von Figur 6A ist vorgesehen, dass die Halteelemente 4, 5 jeweils die zuvor beschriebenen Langlöcher 9 mit vergrößerten Endabschnitten 10 aufweisen, die an unterschiedlichen Enden der Langlöcher 9 angeordnet sind, um die Längsverschiebung der Halteelemente 4, 5 in entgegengesetzte Richtungen zu gewährleisten. Wie zuvor beschrieben, werden die Halteelemente 4, 5 gleichzeitig in entgegengesetzte Richtungen zur Festlegung des Anbauteils 2 verschoben.

Gemäß dem Ausführungsbeispiel von Figur 6B ist vorgesehen, dass nur das Halteelement 5 längsverschiebbar gehalten ist, während das Halteelement 4 durch eine einfache Verschraubung an dem Karosserieteil 3 bereits bei der Vormontage festgelegt ist und insofern nicht längsverschiebbar ist. Zur Montage wird dann das Anbauteil 2 insbesondere zuerst auf das Halteelement 4 aufgeschoben, sodass die Hintergriffmittel 13, 15 miteinander wie zuvor beschrieben wirken, und anschließend wird das Halteelement 5 längsverschoben, um auch dieses festzulegen.

Figur 6C entspricht dem vorhergehenden Ausführungsbeispiel, wobei in diesem Fall das Halteelement 5 festgelegt und nur das Halteelement 4 längsverschiebbar ausgebildet ist.

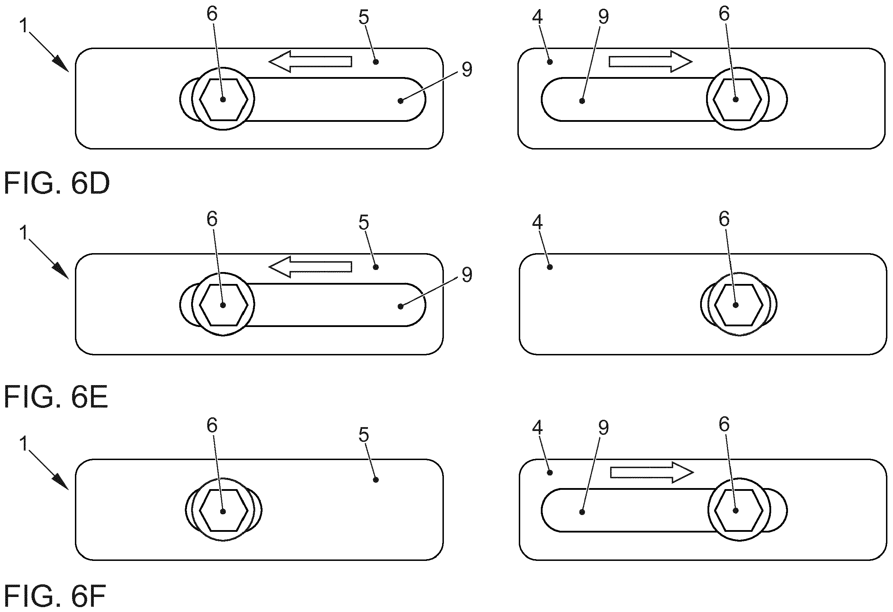

Figur 6D zeigt ein Ausführungsbeispiel, bei welchem die Langlöcher 9 keinen endseitigen vergrößerten Endabschnitt 10 aufweisen. Stattdessen werden die Halteelemente 4, 5 der Figur 5 in diesem Ausführungsbeispiel an dem Karosserieteil 3 dadurch montiert, dass sie zunächst daran angelegt werden, und anschließend die Befestigungsschrauben 6 an das Karosserieteil 3 eingeschraubt werden. Das Festlegen des Anbauteils 2 erfolgt dann wie zu dem ersten Ausführungsbeispiel beschreiben.

Figuren 6E und 6F sind entsprechende Ausführungsformen der Ausführungsbeispiele 6B und 6C, bei welchen anstelle eines vergrößerten Endabschnitts 10 die Befestigungsschrauben 7 erst nach den Halteelementen 4, 5 an dem Karosserieteil 3 vorgesehen werden. Das Festlegen des Anbauteils 2 erfolgt wie zuvor beschrieben.

## Patentansprüche

1. Anordnung (1) zur Befestigung eines leistenförmigen Anbauteils (2) an einem Karosserieteil (3) eines Fahrzeugs, mit wenigstens zwei an dem Karosserieteil (3) festlegbaren Halteelementen (4,5), die zur Halterung des Anbauteils (2) ausgebildet sind, wobei zumindest eines der Halteelemente (4,5) durch Längsverschiebung an dem Karosserieteil (3) festlegbar/festgelegt ist, **dadurch gekennzeichnet, dass** die Halteelemente (4,5) jeweils mindestens ein Hintergriffelement (15) aufweisen, das durch die Längsverschiebung in eine Hintergriffposition mit dem Anbauteil (2) zu dessen Befestigung bringbar/gebracht ist.

2. Anordnung nach dem vorhergehenden Anspruch, **dadurch gekennzeichnet, dass** das Hintergriffelement (15) eines ersten Halteelements (4) durch Längsverschiebung des ersten Halteelements (4) relativ zu dem Anbauteil (2) in eine erste Richtung und das Hintergriffelement (15) eines zweiten Halteelements (5) durch Längsverschiebung des zweiten Halteelements (5) relativ zu dem Anbauteil (2) in eine zweite, der ersten Richtung entgegengesetzte Richtung in die jeweilige Hintergriffposition bringbar/gebracht ist.

3. Anordnung nach einem der vorhergehenden Ansprüche, **dadurch gekennzeichnet, dass** das jeweils längsverschiebbare Halteelement (4,5) ein Langloch (9) zur Aufnahme eines an der Karosserie festgelegten Befestigungsbolzens (6) aufweist, wobei das Langloch (9) im Wesentlichen schmaler ausgebildet ist als ein verbreiteter Kopfabschnitt (7) des Befestigungsbolzens (6) und einen vergrößerten Endabschnitt (10) aufweist, durch welchen der Kopfabschnitt (7) des Befestigungsbolzens (6) hindurchführbar ist.

4. Anordnung nach einem der vorhergehenden Ansprüche, **dadurch gekennzeichnet, dass** beide Halteelemente (4,5) durch Längsverschiebung an dem Karosserieteil (3) festlegbar sind.

5. Anordnung nach einem der vorhergehenden Ansprüche, **dadurch gekennzeichnet, dass** die Halteelemente (4,5) leistenförmig ausgebildet sind und an ihren einander zugewandten Enden (18,19) jeweils ein Schiebemittel (22,23) aufweisen, wobei die Schiebemittel (22,23) derart angeordnet/ausgebildet sind, dass sie durch ein Werkzeug zur Längsverschiebung zumindest eines der Halteelemente (4,5) gleichzeitig mit einer Kraft beaufschlagbar sind.

6. Anordnung nach Anspruch 5, **dadurch gekennzeichnet, dass** das Anbauteil (2) im Bereich der Schiebemittel (22,23) eine Aussparung (20) aufweist, durch welche das Werkzeug bereichsweise zur Kraftbeaufschlagung der Schiebemittel (22,23) hindurchführbar ist.

7. Anordnung nach einem der Ansprüche 5 und 6, **dadurch gekennzeichnet, dass** die Schiebemittel (22,23) als Schiebevorsprünge (24,25) ausgebildet sind, die insbesondere in die Aussparung (20) hineinragen.

8. Anordnung nach Anspruch 7, **dadurch gekennzeichnet, dass** sich die einander zugewandten Enden (18,19) der Halteelemente (4,5) bereichsweise überlappen, wobei eines der Halteelemente (4) in dem Überlappungsbereich eine Aussparung (21) aufweist, in welche der Schiebevorsprung (25) des anderen Halteelements (5) hinein ragt.

9. Anordnung nach einem der Ansprüche 5 bis 8, **dadurch gekennzeichnet, dass** zumindest eines der Halteelemente (4,5) an seinem dem Schiebemittel (22,23) abgewandten Ende in eine Aufnahmetasche (26) des Anbauteils (2) durch die Längsverschiebung einschiebbar/eingeschoben ist.

10. Anordnung nach Anspruch 9, **dadurch gekennzeichnet, dass** die Aufnahmetasche (26) des Anbauteils (2) und das eingeschobene/einschiebbare Ende des Halteelements (4,5) eine Rastvorrichtung (29) zur Arretierung des Anbauteils (2) an dem Halteelement (4,5) aufweisen.

## Claims

1. Arrangement (1) for fastening a strip-shaped attachment part (2) to a body part (3) of a vehicle, with at least two holding elements (4, 5) which can be secured on the body part (3) and are configured for holding the attachment part (2), wherein at least one of the holding elements (4, 5) can be secured/is secured on the body part (3) by longitudinal displacement, **characterized in that** the holding elements (4, 5) each have at least one rear engagement element (15) which can be brought/is brought by the longitudinal displacement into a rear engagement position with the attachment part (2) for the fastening thereof.

2. Arrangement according to the preceding claim, **characterized in that** the rear engagement element (15) of a first holding element (4) can be brought/is brought by longitudinal displacement of the first holding element (4) relative to the attachment part (2) in a first direction, and the rear engagement element (15) of a second holding element (5) can be brought/is brought by longitudinal displacement of the second holding element (5) relative to the attachment part (2) in a second direction opposed to the first direction, into the respective rear engagement position.

3. Arrangement according to either of the preceding claims, **characterized in that** the respectively longitudinally displaceable holding element (4, 5) has an elongated hole (9) for receiving a fastening pin (6) secured on the body, wherein the elongated hole (9) is of substantially narrower configuration than a widened head portion (7) of the fastening pin (6) and has an enlarged end portion (10) through which the head portion (7) of the fastening pin (6) can be passed.

4. Arrangement according to one of the preceding claims, **characterized in that** the two holding elements (4, 5) can be secured on the body part (3) by longitudinal displacement.

5. Arrangement according to one of the preceding claims, **characterized in that** the holding elements (4, 5) are of strip-shaped configuration and each have a sliding means (22, 23) at their mutually facing ends (18, 19), wherein the sliding means (22, 23) are arranged/configured in such a manner that they can be acted upon simultaneously with a force by means of a tool for the longitudinal displacement of at least one of the holding means (4, 5).

6. Arrangement according to Claim 5, **characterized in that**, in the region of the sliding means (22, 23), the attachment part (2) has a recess (20) through which the tool can be passed in regions for acting upon the sliding means (22, 23) with a force.

7. Arrangement according to either of Claims 5 and 6, **characterized in that** the sliding means (22, 23) are configured as sliding projections (24, 25) which project in particular into the recess (20).

8. Arrangement according to Claim 7, **characterized in that** the mutually facing ends (18, 19) of the holding elements (4, 5) overlap in regions, wherein, in the overlapping region, one of the holding elements (4) has a recess (21) into which the sliding projection (25) of the other holding element (5) projects.

9. Arrangement according to one of Claims 5 to 8, **characterized in that** at least one of the holding elements (4, 5) can be pushed/is pushed at its end facing away from the sliding means (22, 23) into a receiving pocket (26) of the attachment part (2) by the longitudinal displacement.

10. Arrangement according to Claim 9, **characterized in that** the receiving pocket (26) of the attachment part (2) and the end of the holding element (4, 5) which is pushed in/can be pushed in have a latching device (29) for locking the attachment part (2) to the holding element (4, 5).

## Revendications

1. Arrangement (1) pour la fixation d'un élément en forme de réglette (2) sur une partie de carrosserie (3) d'un véhicule, avec au moins deux éléments de maintien (4, 5) pouvant être fixés à la partie de carrosserie (3), qui sont configurés pour supporter l'élément (2), dans lequel au moins un des éléments de maintien (4, 5) est/peut être fixé par glissement longitudinal sur la partie de carrosserie (3), **caractérisé en ce que** les éléments de maintien (4, 5) présentent respectivement au moins un élément s'accrochant par l'arrière (15), qui est/peut être amené par le glissement longitudinal dans une position d'accrochage arrière avec l'élément (2) en vue de la fixation de celui-ci.

2. Arrangement selon la revendication précédente, **caractérisé en ce que** l'élément s'accrochant par l'arrière (15) d'un premier élément de maintien (4) et l'élément s'accrochant par l'arrière (15) d'un deuxième élément de maintien (5) peuvent être/sont amenés dans chaque position d'accrochage arrière respectivement par glissement longitudinal du premier élément de maintien (4) par rapport à l'élément (2) dans une première direction et par glissement longitudinal du deuxième élément de maintien (5) par rapport à l'élément (2) dans une deuxième direction opposée à la première direction.

3. Arrangement selon l'une quelconque des revendications précédentes, **caractérisé en ce que** l'élément de maintien (4, 5) respectivement glissant longitudinalement présente un trou oblong (9) destiné à recevoir un boulon de fixation (6) fixé à la carrosserie, dans lequel le trou oblong (9) est essentiellement plus étroit qu'une partie de tête élargie (7) du boulon de fixation (6) et présente une partie d'extrémité agrandie (10), à travers laquelle la partie de tête (7) du boulon de fixation (6) peut être introduite.

4. Arrangement selon l'une quelconque des revendications précédentes, **caractérisé en ce que** les deux éléments de maintien (4, 5) peuvent être fixés à la partie de carrosserie (3) par glissement longitudinal.

5. Arrangement selon l'une quelconque des revendications précédentes, **caractérisé en ce que** les éléments de maintien (4, 5) sont réalisés en forme de réglette et présentent à leurs extrémités tournées l'une vers l'autre (18, 19) chaque fois un moyen de glissement (22, 23), dans lequel les moyens de glissement (22, 23) sont disposés/configurés de telle manière qu'ils puissent être soumis simultanément à une force au moyen d'un outil pour le glissement longitudinal d'au moins un des éléments de maintien (4, 5).

6. Arrangement selon la revendication 5, **caractérisé en ce que** l'élément (2) présente dans la région des moyens de glissement (22, 23) un évidement (20), à travers laquelle l'outil peut être introduit localement pour l'application de la force aux moyens de glissement (22, 23).

7. Arrangement selon une des revendications 5 et 6, **caractérisé en ce que** les moyens de glissement (22, 23) sont réalisés en forme de saillies de glissement (24, 25), qui s'engagent en particulier dans l'évidement (20).

8. Arrangement selon la revendication 7, **caractérisé en ce que** les extrémités (18, 19) tournées l'une vers l'autre des éléments de maintien (4, 5) se chevauchent localement, dans lequel un des éléments de maintien (4) présente dans la région de chevauchement un évidement (21), dans laquelle la saillie de glissement (25) de l'autre élément de maintien (5) s'engage.

9. Arrangement selon l'une quelconque des revendications 5 à 8, **caractérisé en ce qu'**au moins un des éléments de maintien (4, 5) peut être/est glissé à son extrémité éloignée du moyen de glissement (22, 23) dans une poche de réception (26) de l'élément (2) par le glissement longitudinal.

10. Arrangement selon la revendication 9, **caractérisé en ce que** la poche de réception (26) de l'élément (2) et l'extrémité insérée/insérable de l'élément de maintien (4, 5) présentent un dispositif d'encliquetage (29) pour bloquer l'élément (2) sur l'élément de maintien (4, 5).
